# EUROPÄISCHE PATENTSCHRIFT

(11) **EP 4 183 721 B1**
(45) Veröffentlichungstag und Bekanntmachung des Hinweises auf die Patenterteilung: **01.10.2025**
(21) Anmeldenummer: 21208744.9
(22) Anmeldetag: 17.11.2021
(51) Int. Cl.: B65G 11/08, B65G 47/19, B65G 47/72

(54) **SCHURRE ZUR SELBSTZENTRIERENDEN AUFGABE VON SCHÜTTGUT AUF EINEN FÖRDERER SOWIE EIN ENTSPRECHENDES VERFAHREN**
CHUTE FOR THE SELF-CENTERING DISPENSING OF BULK MATERIAL ONTO A CONVEYOR AND CORRESPONDING METHOD
GOULOTTE DESTINÉE À L'ÉPANDAGE AUTOCENTRÉ DES MARCHANDISES EN VRAC SUR UN TRANSPORTEUR, AINSI QUE PROCÉDÉ CORRESPONDANT

(43) Veröffentlichungstag der Anmeldung: 24.05.2023
(73) Patentinhaber: BEUMER Group GmbH & Co. KG, 59269 Beckum (DE)
(72) Erfinder: Borghoff, Nils, 59269 Beckum (DE)
(74) Vertreter: Novagraaf Group

(56) Entgegenhaltungen:
- KR-A- 20110 034 378
- KR-A- 20190 035 440
- US-A- 4 580 698

## Beschreibung

Die Erfindung geht aus von einer Schurre zur selbstzentrierenden Aufgabe von Schüttgut auf einen Förderer, welche eine Rutsche für den gerichteten Transport eines Schüttgutstroms bereitstellt, mit zumindest einem Einlass für Schüttgut, welcher an einem oberen Abschnitt der Schurre angeordnet ist, und mit zumindest einem Auslass für Schüttgut, welcher an einem unteren Abschnitt der Schurre angeordnet ist, sowie mit einer unterhalb des Auslasses angeordneten Förderers zum Abtransportieren des aufgegebenen Schüttguts in einer Förderrichtung, und mit zumindest einem verstellbaren Leitelement zum Umlenken des Schüttgutstroms, und mit einer Erfassungseinrichtung zum Erfassen eines Ist-Zustands zumindest eines Parameters eines Fördermittels des Förderers, wobei eine Verstellvorrichtung zum Verstellen des zumindest einen Leitelements auf Grundlage des Ist-Zustands derart angesteuert ist, dass der zumindest eine erfasste Parameter des Fördermittels einem vorbestimmten Soll-Zustand angenähert wird. Eine derartige Schurre ist bekannt aus der Druckschrift KR 2019 0035440 A.

Als Schurre können Bestückungsrinnen und ähnliche Förder- und Befüllungseinrichtungen oder Rutschen bezeichnet werden. Schurren bilden eine insbesondere trichterförmige Rutsche zum gerichteten Transport von Feststoffen, insbesondere Schüttgütern, mittels Schwerkraft. Bei einer Übergabe von Fördermaterial von einer Schurre auf einen Förderer besteht das Problem zumeist darin, dass das Fördermaterial bei voller Beladung beziehungsweise großem Schüttgutstrom nahezu zentrisch auf dem Förderer liegt, bei einer Teilbeladung beziehungsweise einem geringen Schüttgutstrom jedoch stark exzentrisch auf dem Förderer liegen kann. Dies kann einerseits zu Schieflauf des Fördermittels des Förderers und zu einem höheren Verschleiß führen, andererseits kann ein Teil des Schüttguts seitlich vom Förderer herabfallen und dadurch wirtschaftliche Einbußen erzeugen beziehungsweise den Betriebsablauf stören, ferner kann dadurch der betroffene Anlagenbereich verschmutzen und einen unnötigen Wartungsaufwand hervorrufen.

Als Förderer sind beispielsweise Muldengurtförderer, Rohrgurtförderer (pipe conveyor) oder Taschenförderer zu verstehen. Das Förderbett des Förderers kann einen wannenförmigen, U-förmigen oder gemuldeten Querschnitt aufweisen. Insbesondere kann das Förderbett aus Tragrollen oder Pralltischen oder Aufgabetischen bestehen.

Als Fördermittel können beispielsweise Gurte oder Matten vorgesehen sein.

Als Schüttgüter sind beispielsweise gebrochene Erze, Kohle, Kalkstein, Kies, Schotter, oder Sand zu verstehen.

Aus dem Stand der Technik sind bereits unterschiedliche Lösungen zu der oben genannten Problemstellung bekannt. Beispielsweise wird ein fest in der Schurre installiertes Leitblech eingesetzt, welches den Schüttgutstrom bei einer Teilbeladung davon abhalten soll, exzentrisch auf dem Förderer zu landen. Allerdings funktioniert dieser Ansatz nur für einen kontinuierlich eingestellten Massenstrom, bei Abweichungen von diesem können trotzdem Exzentrizitäten des Schüttguts auf dem Förderer auftreten. Ebenfalls bekannt sind manuell einstellbare Materialaufgaben, allerdings keine, die aktiv die Zentrierung des Massenstroms regeln. Insbesondere bei wechselnden Eigenschaften des Förderstroms muss entsprechend häufig in der Aufgabe reagiert werden. Dies ist durch Personal vor Ort nicht zu realisieren und kann daher nur motorisch automatisiert erfolgen.

Aus der KR 100765113 B1 ist eine Schurre mit mittels Luftkissen verstellbaren Leitelementen am Schurrenauslass bekannt, welche einen Schüttgutstrom auf einen Gurtförderer leitet. Die Leitelemente werden anhand eines an einem der Schurre vorgelagerten Förderband angeordneten Gewichtssensors angesteuert und dadurch in ihrer Winkelstellung variiert. Die offenbarte Vorrichtung weist den Nachteil auf, dass die Sensorik nicht den tatsächlichen Schieflauf von Schüttgut auf dem Förderer oder den Schieflauf des Fördermittels mit Bezug auf den Förderer in die Ansteuerung der Leitelemente mit einbezieht.

Es ist daher die Aufgabe der Erfindung, eine Schurre mit zumindest einem verstellbaren Leitelement derart weiterzuentwickeln, dass eine außermittige Schüttgutaufgabe und ein dadurch bedingter Schieflauf des Fördermittels verhindert wird. Insbesondere soll dies automatisiert erfolgen.

Die Aufgabe wird gelöst mit den Merkmalen der unabhängigen Ansprüche.

Demgemäß ist vorgesehen, dass der zumindest eine Parameter die Lage des Schüttgutstroms auf dem Fördermittel umfasst. Die Lage des Schüttgutstroms auf dem Fördermittel ist dadurch bestimmt, dass ein Mittelpunkt oder eine Mittelachse des Schüttgutstroms im Hinblick auf dessen seitliche Ausbreitung ermittelt wird und diese in Relation zu einer vorbestimmten fixen Mittelachse des Förderers gesetzt wird..

Die Erfindung weist den Vorteil auf, dass durch die verbesserte Lenkungsmöglichkeit des Schüttgutstroms wechselnde Eigenschaften des Fördermaterials, wie beispielsweise die Menge des Fördermaterials oder Eigenschaften des Fördermaterials selbst, besser ausgeglichen werden können. Dadurch wird erreicht, dass das Material immer mittig auf dem Fördermittel des Förderers liegt, wobei davon ausgegangen wird, dass die Mittelachse des Fördermittels bei der Materialaufgabe mit der Mittelachse des Förderers übereinstimmt. Dadurch wird ein Schieflauf des Fördermittels vermieden und somit die Verfügbarkeit der Anlage erhöht. Zudem beugt es auch Materialverlust vor und schützt sowohl Anlage als auch Umwelt vor Verschmutzungen durch das Fördermaterial. Die Erfindung verfolgt damit die Idee einer aktiven Vermeidung von Ursachen für Gurtschieflauf, anstatt eine Symptombekämpfung zu betreiben, wie zum Beispiel durch den Einsatz von Lenkrollenstühlen. Die Erfindung ermöglicht damit zudem eine Erhöhung der Anlagenverfügbarkeit sowie eine Verringerung von Anlagenreinigungsintervallen. Insbesondere weist die Erfindung den Vorteil auf, dass kein konstanter Personalbedarf mehr vor Ort an der Schurre besteht.

Das Leitelement kann als flaches Leitblech ausgebildet sein. Das Leitblech kann einen rechteckigen Querschnitt aufweisen. Das Leitelement kann ferner in Strömungsrichtung des Schüttguts oder orthogonal dazu einen konkaven oder konvexen Verlauf aufweisen. Der zumindest eine Einlass der Schurre kann an deren Oberseite angeordnet sein. Es können alternativ zwei oder mehr Einlässe vorgesehen sein. Die Schurre kann von oben nach unten betrachtet einen ersten Abschnitt aufweisen, welcher trichterförmig ausgebildet ist. Die Schurre kann anschließend an den ersten Abschnitt einen zweiten Abschnitt aufweisen, welcher im Wesentlichen parallele, insbesondere senkrechte, Wände aufweist. An der Unterseite des zweiten Abschnitts können waagerechte, den Auslass definierende Wandabschnitte angeordnet sein. Insbesondere kann die Schurre zumindest einen weiteren Abschnitt aufweisen, in dem das Material umgelenkt werden kann. Die Leitelemente können am Rand, welcher den Auslass definiert, dieser waagerechten Wandabschnitte befestigt sein. Ferner können zwei oder mehrere Auslässe vorhanden sein. Der Förderer kann bei der Schüttgutaufgabe ein Förderbett aufweisen, welches einen wannenförmigen, U-förmigen, V-förmigen oder gemuldeten Querschnitt aufweist. Im weiteren Verlauf des Förderers kann das Förderbett einen wannenförmigen, U-förmigen, V-förmigen, gemuldeten, schlauchförmigen oder rohrförmigen Querschnitt aufweisen. Die Leitelemente können derart bemessen und/oder angeordnet sein, dass die Unterseiten der Leitelemente in den wannenförmigen Querschnitt des Fördermittels hineinragen. Der Soll-Zustand kann umfassen, dass die Mitte des Schüttgutstroms in Förderrichtung mit einer Mittelachse des Förderers übereinstimmt. Der Soll-Zustand kann ferner umfassen, dass sich die seitliche Ausbreitung des Schüttgutstroms auf dem Fördermittel in einem vorbestimmten Rahmen befindet. Der Soll-Zustand kann außerdem umfassen, dass die verschiebliche Mittalachse eines auf dem Förderer bewegten Fördermittels, wie beispielsweise ein Fördergurt, mit einer fixen Mittelachse des Förderers übereinstimmt. Es kann vorgesehen sein, dass die Ansteuerung der Verstellvorrichtung mittels eines PID-Reglers erfolgt. Es kann vorgesehen sein, dass der Auslass mittels der Leitbleche durch die Verstellvorrichtung vollständig verschließbar ist.

Es ist denkbar, dass die Verstellvorrichtung eine Steuereinheit aufweist, mittels welcher die Leitelemente unabhängig voneinander ansteuerbar sind. Beispielsweise kann vorgesehen sein, dass bei Erkennen eines Schieflaufs von Schüttgut oder Fördermittel durch die Erfassungseinrichtung lediglich das Leitelement angesteuert wird, bei welchem der Schüttgutstrom oder das Fördermittel über den vorbestimmten Bereich hinausragt. Ferner kann vorgesehen sein, dass bei Erkennen eines beidseitigen Übertretens des vorbestimmten Bereichs durch das Schüttgut beide Leitelemente entsprechend der nötigen Positionskorrektur angesteuert werden. Dadurch kann selbstverständlich ebenfalls vorgesehen sein, dass beide Leitelemente in dieselbe Winkelstellung überführt werden.

Es kann vorgesehen sein, dass die Verstellvorrichtung zwei oder mehr Leitelemente aufweist. Es kann vorgesehen sein, dass die Leitelemente gegenüberliegend angeordnet sind. Es kann vorgesehen sein, dass die Leitelemente parallele Schwenkachsen aufweisen. Ferner kann vorgesehen sein, dass die Verstellvorrichtung eine Steuereinheit aufweist, mittels welcher die zwei oder mehr Leitelemente unabhängig voneinander ansteuerbar sind.

Es kann vorgesehen sein, dass das zumindest eine Leitelement so angeordnet ist, dass es in den Schüttgutstrom hineinschwenkbar ist. Es kann ferner vorgesehen sein, dass das Leitelement an seiner Oberkante gelenkig gelagert mit der Schurre,dem Auslass der Schurre oder dem Förderer verbunden ist, so dass mittels der Unterkanten des zumindest einen Leitblechs ein Durchtrittsquerschnitt für den Schüttgutstrom definierbar ist. Dabei können die Leitelemente beispielsweise an den Innenwänden der Schurre befestigt sein oder am Rand des Auslasses. Alternativ oder zusätzlich kann vorgesehen sein, dass die Leitelemente linear in ihrer Hauptausbreitungsebene verschiebbar sind, so dass die Größe des durch die Leitelemente definierten Durchtrittsquerschnitt dadurch zusätzlich eingestellt werden kann. Es kann insbesondere vorgesehen sein, dass die Leitelemente jeweils um Schwenkachsen verschwenkbar sind, welche parallel zur Förderrichtung des Förderers ausgerichtet sind.

Es kann vorgesehen sein, dass das Leitelement am Auslass befestigt ist und jeweils stufenlos zwischen einer ersten Position, in welcher der Auslassquerschnitt vergrößert ist, und einer zweiten Position, in welcher der Auslassquerschnitt verkleinert ist, verstellbar ist. Bei einer Befestigung der Leitelemente am Auslass können die Leitelemente in einem Schwenkbereich von jeweils etwa 180° verschwenkt werden. Es kann vorgesehen sein, dass die Leitelemente in einer mittigen Position zwischen der ersten Position und der zweiten Position senkrecht ausgerichtet sind. Es kann vorgesehen sein, dass die Leitelemente in der ersten Position von einer Mittelachse der Schurre wegweisen und dass die Leitelemente in der zweiten Position zu der Mittelachse hinweisen.

Es ist denkbar, dass die Verstellvorrichtung je Leitelement zumindest einen Aktuator aufweist, welcher das jeweilige Leitelement pneumatisch, hydraulisch oder elektromotorisch ansteuert. Der Aktuator kann insbesondere auf der dem Schüttgutstrom abgewandten Seite des jeweiligen Leitelements mit diesem verbunden sein. Der Aktuator kann einen Linearantrieb oder einen Hubkolben umfassen.

Es kann vorgesehen sein, dass das zumindest eine Leitelement so angeordnet ist, dass das Umlenken des Schüttgutstroms orthogonal zur Förderrichtung erfolgt. Alternativ kann vorgesehen sein, dass das Umlenken des Schüttgutstroms sowohl orthogonal als auch parallel zum Schüttgutstrom erfolgen kann. Dadurch kann die Schurre beispielsweise unabhängig von der Ausrichtung des Förderers beziehungsweise dessen Förderrichtung betrieben werden und muss ferner nicht mitbewegt werden, wenn die Förderrichtung des Förderers verändert wird.

Es kann vorgesehen sein, dass der zumindest eine Parameter die Lage des Schüttgutstroms und den Volumenstrom des Schüttguts auf dem Fördermittel umfasst.

Es kann vorgesehen sein, dass bei Feststellung eines Schieflaufs des Fördermittels das zumindest eine Leitelement so angesteuert ist, dass eine gezielte außermittige Schüttgutaufgabe erfolgt und dadurch das Fördermittel wieder in eine mittige Position zurückgeführt ist. Wenn beispielsweise ein Gurtschieflauf zu einer bestimmten Seite hin festgestellt wird, kann der Schüttgutstrom demnach bewusst überkompensierend außermittig auf die Seite des Gurtförderers aufgegeben werden, welche frei von Schüttgut ist.

Es kann vorgesehen sein, dass die Erfassungseinrichtung ein Sensor ist. Beispielsweise kann die Erfassungsrichtung so ausgebildet und/oder angeordnet sein, dass diese nicht in Kontakt mit dem Förderer und/oder dem Schüttgutstrom steht. Der Sensor kann ein optischer Sensor sein. Der Sensor kann insbesondere zur Kantenerkennung eingerichtet sein. Der Sensor kann dazu eingerichtet sein, die Grenzen des Schüttgutstroms anhand von Helligkeitsunterschieden oder Farbunterschieden zu detektieren. Ferner kann vorgesehen sein, dass die Erfassungseinrichtung ein Radarsensor, ein akustischer Sensor oder ein Ultraschallsensor ist. Ferner kann vorgesehen sein, dass die Erfassungseinrichtung ein mechanischer Taster ist, der in Kontakt mit dem Förderer, und/oder dem Fördermittel und/oder dem Schüttgutstrom steht.

Es kann vorgesehen sein, dass der Sensor in Förderrichtung stromabwärts der Schurre auf den Schüttgutstrom beziehungsweise den Förderer und/oder das Fördermittel gerichtet ist. Durch die Anordnung des Sensors stromabwärts der Schurre kann der Schieflauf an einer Position erkannt werden, an welcher etwaige Schwankungen des Schüttgutstroms oder des Gurtförderers durch die konstante Schüttgutaufgabe bereits nachgelassen haben. Ferner kann vorgesehen sein, dass der Sensor nicht nur punktuell sondern über einen vorbestimmten Förderabschnitt hinweg das Schüttgut und/oder den Gurtförderer erfasst, um dadurch einerseits frühzeitige Änderungen erkennen zu können und andererseits Pseudoabweichungen ausschließen zu können.

Es kann vorgesehen sein, dass der Förderer gegenüber der Schurre verdrehbar ist, so dass die Förderrichtung variierbar ist. Beispielsweise kann der Förderer ein Absetzer oder ein Reclaimer sein.

Es kann vorgesehen sein, dass der Schurre ferner eine Fördervorrichtung zum Speisen der Schurre mit dem Schüttgutstrom vorgelagert ist, wobei die Fördervorrichtung eine Waage, insbesondere eine Bandwaage, zum Wiegen des Schüttgutstroms vor Erreichen des Einlasses der Schurre aufweist, wobei die Verstellvorrichtung zusätzlich oder alternativ auf Grundlage des durch die Waage ermittelten Schüttgutstroms ansteuerbar ist.

Die Erfindung betrifft ferner ein Verfahren zum Betreiben einer Schurre, aufweisend die Schritte:
Speisen zumindest eines Schurreneinlasses mit einem Schüttgutstrom;
Aufgeben des Schüttgutstroms durch zumindest einen Schurrenauslass auf ein Fördermittel;
Ermitteln der Ist-Lage des Schüttgutstroms mittels einer, beispielsweise in Strömungsrichtung hinter dem zumindest einen Schurrenauslass, angeordneten Erfassungseinrichtung;
Übermitteln der mittels der Erfassungseinrichtung ermittelten Ist-Werte an eine Steuereinheit und Abgleichen der Ist-Werte mit entsprechenden vorbestimmten Soll-Werten;
Erzeugen eines Signals auf Grundlage der ermittelten Differenz zwischen den Ist-Werten und den Soll-Werten mittels der Steuereinheit zum Ansteuern von zumindest einem Leitelement zum Umlenken des Schüttgutstroms, sodass der zumindest eine erfasste Parameter des auf das Fördermittel aufgegebenen Schüttgutstroms dem jeweiligen vorbestimmten Soll-Wert angenähert wird.

Es kann vorgesehen sein, dass das Verfahren ferner umfasst:
Ermitteln des Gewichts des Massenstroms des Schüttguts vor Erreichen des Schurreneinlass;
Anlernen der Steuereinheit hinsichtlich der zu erwartenden Auslenkung des Schüttgutstroms in Abhängigkeit vom ermittelten Massenstrom durch Zuordnen der für bestimmte Auslenkungen ermittelten Signale zum Ansteuern der Leitelemente zum jeweiligen ermittelten Massenstrom;
Frühzeitiges Ansteuern des zumindest einen Leitelements mittels der zugeordneten Steuersignale in Abhängigkeit des ermittelten Massenstroms.

Das Gewicht des Massenstroms des Schüttguts kann beispielsweise mittels einer Bandwaage vorgenommen werden, welche in eine der Schurre vorgelagerte Fördervorrichtung integriert ist. Das System kann dabei selbstlernend aufgebaut werden. Da der Massenstrom vor der Übergabe durch Bandwaagen bekannt ist, können sich die Leitbleche mit zunehmender "Erfahrung" schon im Vorfeld auf den auftreffen Materialstrom einstellen und somit die aktive Lenkung reduzieren. Zudem kann dieses System in Verbindung mit der Bandwaage auch Aussagen zur Schüttdichte des Materials liefern und so prüfen, ob der spezifizierte Auslegungspunkt der Anlage überschritten wird. Es kann vorgesehen sein, dass bei Überschreitung von Grenzwerten entsprechende Warnungen und/oder Vorwarnungen an den Anlagenbetreiber gesendet werden. Durch ein selbstlernendes System kann eine frühzeitige Erkennung von abweichenden Mustern ermöglicht werden, ferner ist es möglich, dass die Anlagensteuerung in solchen Fällen Hinweis auf eine notwendige Wartung ausgibt. Frühzeitig im Sinne der Anmeldung kann bedeuten, dass ein Ansteuern der Leitelemente erfolgt, bevor die durch die Bandwaage ermittelte Massenstromabweichung die Leitelemente erreicht. In Verbindung mit der Bandwaage kann ferner eine automatische Bestimmung der Schüttdichte erfolgen oder beispielsweise eine automatische Erkennung von Schurrenblockaden. Somit eignet sich die Anwendung der erfinderischen Idee insbesondere für Materialübergaben mit veränderlichen Eigenschaften wie Materialfeuchte oder Massenstrom oder etwa für unterschiedliche Materialien in der gleichen Übergabe. Einem bereits vorhandenen Schieflauf des Fördermittels bei der Materialaufgabe kann durch eine gezielt gesteuerte Aufgabe des Materials entgegengewirkt werden.

Ferner kann vorgesehen sein, dass zumindest zwei oder mehr Leitelemente vorgesehen sind, die unabhängig voneinander angesteuert werden und für jedes Leitelement ein separates Ansteuersignal erzeugt wird.

Weitere Einzelheiten der Erfindung werden anhand der nachstehenden Figuren erläutert. Dabei zeigen:
- Fig. 1: eine Querschnittsansicht einer beispielhaften Schurre aus dem Stand der Technik ohne Leitelement;
- Fig. 2: eine schematische Ansicht einer Ausführungsform der erfindungsgemäßen Schurre in Frontalansicht;
- Fig. 3: eine schematische Ansicht einer Ausführungsform der erfindungsgemäßen Schurre in Seitenansicht;
- Fig. 4: eine Frontalansicht sowie eine Seitenansicht einer Ausführungsform der erfindungsgemäßen Schurre am Beispiel eines großen Schüttgutstroms;
- Fig. 5: eine Frontalansicht sowie eine Seitenansicht einer Ausführungsform der erfindungsgemäßen Schurre am Beispiel eines geringen Schüttgutstroms.

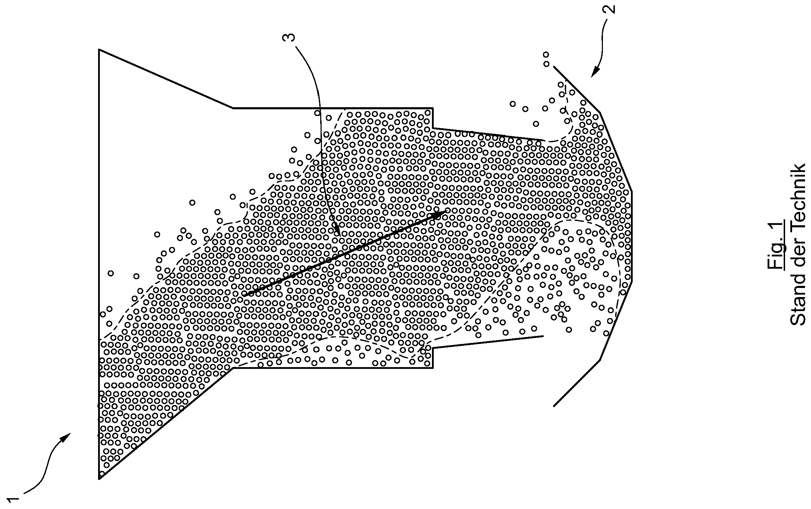

Die in Figur 1 gezeigte Schurre 1 aus dem Stand der Technik weist am oberen Ende einen Einlass, einen im Wesentlichen trichterförmigen Rohrverlauf sowie einen am unteren Ende angeordneten Auslass auf. Das Schüttgut wird am Einlass in die Schurre eingefüllt, wobei zu erkennen ist, dass das Schüttgut nicht mittig beziehungsweise vertikal in die Schurre 1 eingefüllt wird, sondern seitlich von links, ausgehend von einem waagerecht fördernden Förderer. Das Schüttgut fällt kontinuierlich in einem Schüttgutstrom 3 durch die durch die Schurre 1 definierte Rutsche und tritt durch die durch die Trichterform induzierte seitliche Bewegungskomponente vorwiegend rechts unten am Auslass aus der Schurre aus und trifft anschließend außermittig auf einen unterhalb der Schurre 1 angeordneten wannenförmigen Gurtförderer 2. Durch das seitliche Beladen des Fördergurts drängt das außermittig darauf aufgegebene Schüttgut schwerkraftgetrieben den Fördergurt aus seiner mittigen Bahn, so dass ein Schieflauf erzeugt wird und das Schüttgut teilweise über den Rand des Fördergurts herabfällt.

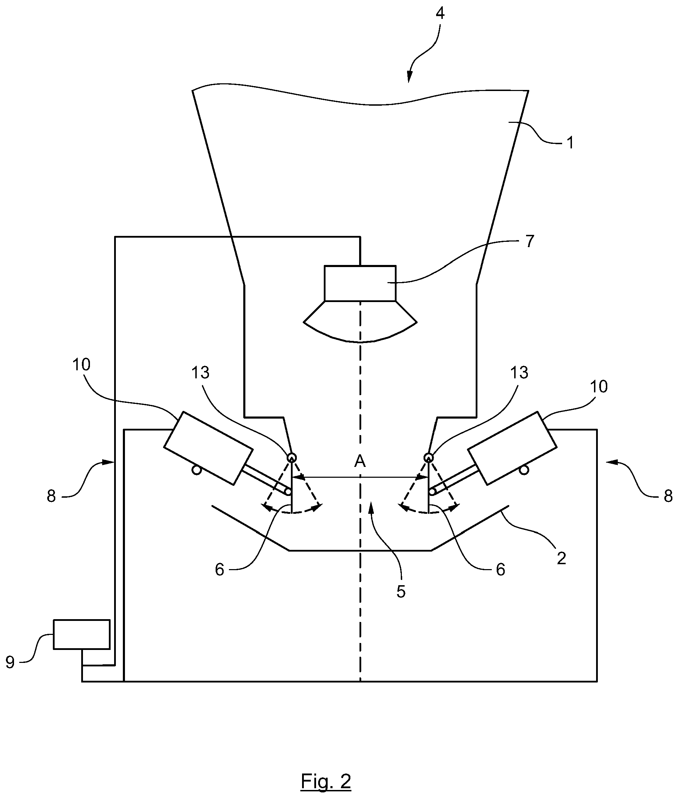

Figur 2 zeigt die schematische Frontalansicht einer Ausführungsform der erfindungsgemäßen Schurre 1. Diese weist einen oberen trichterförmigen Abschnitt auf, an dessen Oberseite der Einlass 4 angeordnet ist. An den trichterförmigen Abschnitt schließt sich ein Abschnitt mit im Wesentlichen senkrechten Wänden an, an dessen Unterseite der Auslass 5 angeordnet ist. An der den Auslass 5 definierenden Umrandung sind an gegenüberliegenden Seiten mittels Gelenkverbindungen 13 verschwenkbare Leitbleche 6 befestigt, welche sich im Wesentlichen nach unten von der Schurre 1 wegerstrecken. Die Winkelausrichtung der Leitbleche 6 ist jeweils mittels seitlich an den Leitblechen befestigten Aktuatoren 10 variierbar, so dass ein durch die Leitbleche 6 definierter Durchtrittsquerschnitt A veränderbar ist. Die Aktuatoren 10 sind Teil einer Verstellvorrichtung 8, welche ferner eine die Aktuatoren 10 ansteuernde Steuereinheit 9 aufweist. Die Steuereinheit 9 empfängt zum Einstellen der Leitbleche 6 Signale von einer Erfassungseinrichtung 7, welche im Wesentlichen einen außermittigen Verlauf von Schüttgut und/oder Fördergurt ermittelt. Der unterhalb des Auslasses 5 angeordnete Gurtförderer 2 weist eine Wannenform auf, wobei der obere Rand des Förderers 2 mit den Unterseiten der Leitbleche 6 horizontal überlappt.

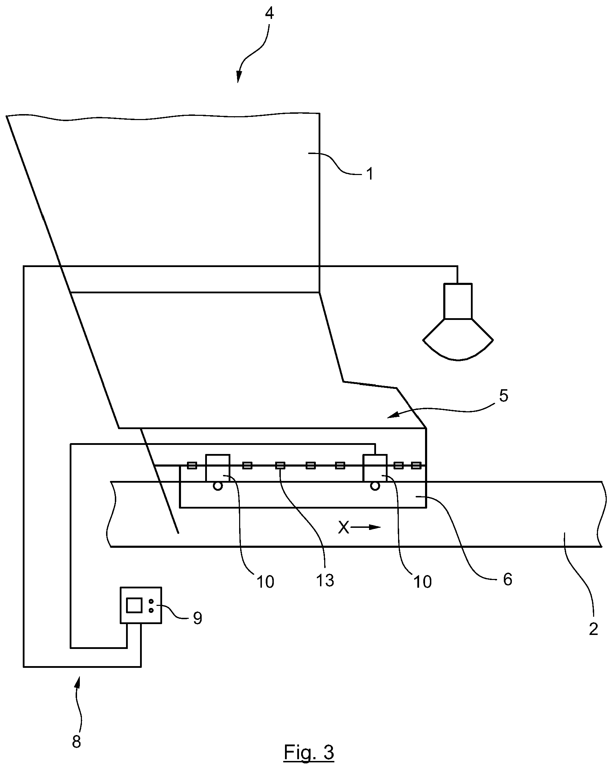

Figur 3 veranschaulicht die Ausführungsform von Figur 2 in einer Seitenansicht. Es ist erkennbar, dass sich die Leitbleche 6 parallel zur Förderrichtung X des der Schurre 1 nachgelagerten Förderers 2 erstrecken. Die Leitbleche sind jeweils über eine Mehrzahl Gelenkverbindungen 13 an den Schurrenauslass 5 anscharniert und sind jeweils mittels zwei motorisch betriebenen und voneinander beabstandeten Aktuatoren 10 verstellbar. Die Steuereinheit 9 weist jeweils zu der Mehrzahl Aktuatoren 10 des einen Leitblechs 6 und zu der Mehrzahl Aktuatoren 10 des anderen, gegenüberliegenden Leitblechs 6 eine Kommunikationsverbindung auf, so dass beide Leitbleche 6 unabhängig voneinander durch die Steuereinheit 9 ansteuerbar sind. Die Erfassungseinrichtung 7 ist als optischer Sensor ausgebildet, welcher in Strömungsrichtung X stromabwärts vom Schurrenauslass 5 oberhalb des Förderers 2 angeordnet ist und auf den Förderer 2 gerichtet ist. Die Erfassungseinrichtung 7 weist ebenfalls eine Kommunikationsverbindung mit dem Steuergerät 9 auf und meldet diesem im Wesentlichen, an welcher Seite des Förderers 2 und in welchem Ausmaß ein außermittiger Verlauf des Schüttguts auf dem Förderer und/oder ein außermittiger Verlauf des Fördergurts selbst auftritt, so dass die Steuereinheit 9 eines der Leitbleche 6 oder beide Leitbleche 6 in adäquater Weise verstellen kann.

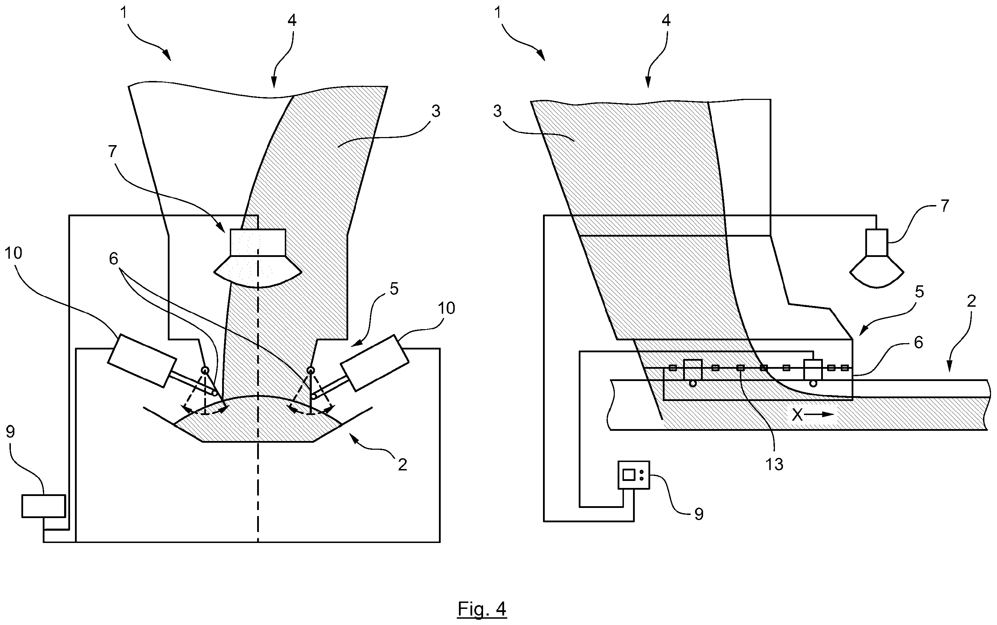

Figur 4 veranschaulicht das Verhalten der Ausführungsform der in den Figuren 2 und 3 gezeigten Schurre 1 bei Auftreten eines großen Massenstroms. Es ist zu erkennen, dass der Schüttgutstrom 3 von oben rechts in die Schurre 1 eingeführt wird und im Verlauf Richtung Auslass 5 vorwiegend nach links strömt und entsprechend ohne Beeinflussung zu einem größeren Anteil außermittig auf der linken Seite des unter dem Auslass 5 angeordneten Förderers 2 auftreffen und verbleiben würde. Das linke Leitblech 6 ist daher zur Innenseite des Schurrenauslass 5 hin ausgelenkt, so dass der Schüttgutstrom 3 in einer mittigen Ausrichtung auf dem Förderer 2 aufkommt. An der rechten Seite des Schurrenauslass 5 strömt der Schüttgutstrom 3 in einer im Wesentlichen senkrechten Richtung zum Förderer 2, daher weist das rechte Leitblech 6 im gezeigten Beispiel eine senkrechte Position auf. In der Seitenansicht ist zu erkennen, dass der Schüttgutstrom 3 im Wesentlichen an einer Rückwand der Schurre 1 entlanggeführt wird, wobei die Rückwand in Richtung des Förderers 2 geneigt ist. Bei Erreichen des unteren Bereichs der Schurre 1 wird der Schüttgutstrom 3 dann in Richtung der Vorderseite der Schurre leicht aufgestaut, so dass die Leitbleche 6 den Schüttgutstrom 3 auf fast ihrer gesamten Erstreckung in Förderrichtung X seitlich umlenken können.

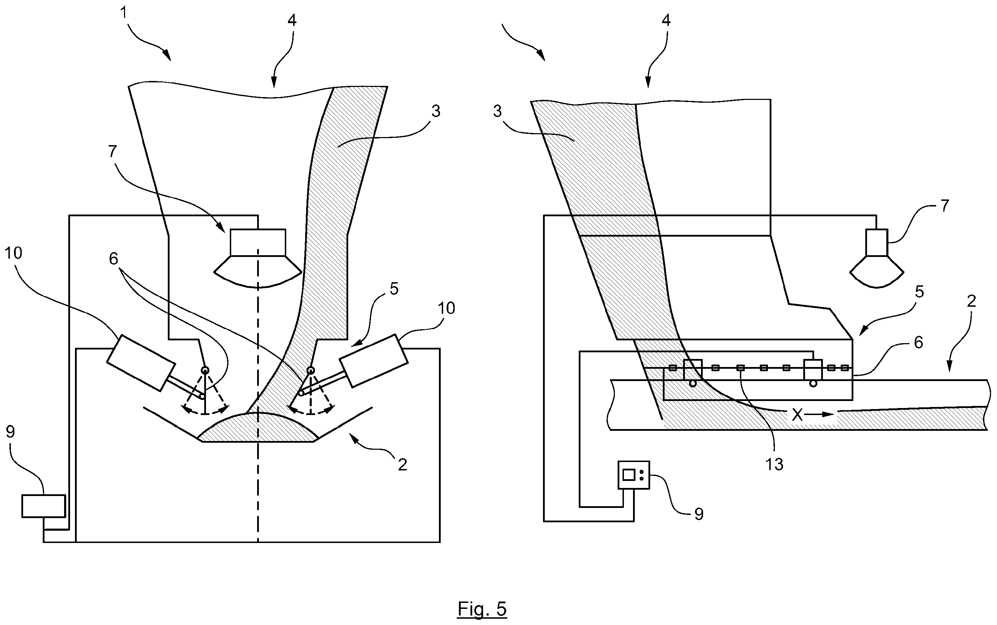

Figur 5 veranschaulicht das Verhalten der Ausführungsform der in den Figuren 2 bis 4 gezeigten Schurre 1 bei Auftreten eines geringen Massenstroms. Wie in Figur 4 ist zu erkennen, dass der Schüttgutstrom 3 von oben rechts in die Schurre 1 eingeführt wird und im Verlauf Richtung Auslass 5 vorwiegend nach links strömt, aufgrund des gegenüber Figur 4 jedoch geringeren Massenstroms ohne Beeinflussung rechts von der Mitte des Förderers 2 auf diesen auftreffen würde. Zwischen dem linken Leitblech 6 und dem Schüttgutstrom 3 verbleibt ein Abstand, so dass in diesem Fall eine Ansteuerung des linken Leitblechs 6 nicht notwendig ist. Um den vorwiegend auf der rechten Seite des Schurrenauslass 5 ankommenden Schüttgutstrom 3 in Richtung Mitte des Förderers zu lenken, ist im gezeigten Beispiel das rechte Leitblech 6 so angesteuert, dass dieses angewinkelt in Richtung Mitte des Schurrenauslass 5 weist. In der Seitenansicht ist ebenfalls zu erkennen, dass der Schüttgutstrom 3 im Wesentlichen an der Rückwand der Schurre 1 entlanggeführt wird. Bei Erreichen des unteren Bereichs der Schurre 1 wird der kleinere Schüttgutstrom 3 dann in Richtung der Vorderseite der Schurre nur gering aufgestaut, so dass die Leitbleche 6 den Schüttgutstrom 3 nur im der Rückwand zugewandten Bereich in Eingriff mit dem Schüttgutstrom stehen.

### Bezugszeichenliste

- 1: Schurre
- 2: der Schurre nachgelagerter Förderer
- 3: Schüttgutstrom
- 4: Einlass
- 5: Auslass
- 6: Leitelement
- 7: Erfassungseinrichtung
- 8: Verstellvorrichtung
- 9: Steuereinheit
- 10: Aktuator
- 11: der Schurre vorgelagerte Fördervorrichtung
- 12: Waage
- 13: Gelenkverbindung

## Patentansprüche

1. Schurre (1) zur selbstzentrierenden Aufgabe von Schüttgut auf einen Förderer, welche eine Rutsche für den gerichteten Transport eines Schüttgutstroms (3) bereitstellt,
mit zumindest einem Einlass (4) für Schüttgut, welcher an einem oberen Abschnitt der Schurre (1) angeordnet ist,
und mit zumindest einem Auslass (5) für Schüttgut, welcher an einem unteren Abschnitt der Schurre (1) angeordnet ist,
sowie mit einem unterhalb des Auslasses (5) angeordneten Förderer (2) zum Abtransportieren des aufgegebenen Schüttguts in einer Förderrichtung (X), und mit zumindest einem verstellbaren Leitelement (6) zum Umlenken des Schüttgutstroms (3),
und mit einer Erfassungseinrichtung (7) zum Erfassen eines Ist-Zustands zumindest eines Parameters des auf ein Fördermittel des Förderers aufgegebenen Schüttgutstroms (3),
wobei eine Verstellvorrichtung (8) zum Verstellen des zumindest einen Leitelements (6) auf Grundlage des Ist-Zustands derart angesteuert ist, dass der zumindest eine erfasste Parameter des auf das Fördermittel (2) aufgegebenen Schüttgutstroms (3) einem vorbestimmten Soll-Zustand angenähert wird, **dadurch gekennzeichnet, dass** der zumindest eine Parameter die Lage des Schüttgutstroms (3) auf dem Fördermittel (2) umfasst, wobei die Lage des Schüttgutstroms (3) eine Relation eines Mittelpunkts oder einer Mittelachse des Schüttgutstroms (3) im Hinblick auf eine seitliche Ausbreitung des Schüttgutstroms (3) zu einer fixen Mittelachse des Förderers ist.

2. Schurre (1) nach Anspruch 1, wobei die Verstellvorrichtung (8) zwei oder mehr Leitelemente (6) aufweist.

3. Schurre (1) nach Anspruch 1, wobei die Verstellvorrichtung (8) eine Steuereinheit (9) aufweist, mittels welcher das zumindest eine Leitelement (6 ansteuerbar ist.

4. Schurre (1) nach Anspruch 2, wobei die Verstellvorrichtung (8) eine Steuereinheit (9) aufweist, mittels welcher die zwei oder mehr Leitelemente (6) unabhängig voneinander ansteuerbar sind.

5. Schurre (1) nach einem der vorangehenden Ansprüche, wobei das zumindest eine Leitelement (6) an seiner Oberkante gelenkig gelagert mit der Schurre (1) oder dem Auslass (5) verbunden ist, so dass mittels der Unterkante des zumindest einen Leitblechs (6) ein Durchtrittsquerschnitt (A) für den Schüttgutstrom (3) definierbar ist.

6. Schurre (1) nach einem der vorangehenden Ansprüche, wobei das zumindest eine Leitelement (6) am Auslass (5) befestigt ist und jeweils stufenlos zwischen einer ersten Position, in welcher der Durchtrittsquerschnitt (A) vergrößert ist, und einer zweiten Position, in welcher der Durchtrittsquerschnitt (A) verkleinert ist, verstellbar ist.

7. Schurre (1) nach einem der vorangehenden Ansprüche, wobei die Verstellvorrichtung (8) je Leitelement (6) zumindest einen Aktuator (10) aufweist, welcher das jeweilige Leitelement (6) pneumatisch, hydraulisch oder elektromotorisch ansteuert.

8. Schurre (1) nach einem der vorangehenden Ansprüche, wobei das zumindest eine Leitelement (6) so angeordnet ist, dass das Umlenken des Schüttgutstroms (3) im Wesentlichen orthogonal zur Förderrichtung (X) erfolgt.

9. Schurre (1) nach einem der vorangehenden Ansprüche, wobei der zumindest eine Parameter die Lage des Schüttgutstroms (3) auf dem Fördermittel (2) und den Volumenstrom des Schüttguts auf dem Fördermittel umfasst.

10. Schurre (1) nach einem der vorangehenden Ansprüche, wobei die Erfassungseinrichtung (7) einen Sensor aufweist.

11. Schurre (1) nach einem der vorangehenden Ansprüche, wobei der Sensor in Förderrichtung (X) stromabwärts der Schurre (1) auf den Schüttgutstrom (3) beziehungsweise das Fördermittel (2) gerichtet ist.

12. Schurre (1) nach einem der vorangehenden Ansprüche, wobei der Förderer (2) gegenüber der Schurre (1) verdrehbar ist, so dass die Förderrichtung (X) variierbar ist.

13. Schurre (1) nach einem der vorangehenden Ansprüche, welche ferner eine weitere Fördervorrichtung (11) zum Speisen der Schurre (1) mit dem Schüttgutstrom (3) vorgelagert ist, wobei die Fördervorrichtung (11) eine Waage (12), insbesondere eine Bandwaage, zum Wiegen des Schüttgutstroms (3) vor Erreichen des Einlasses (4) der Schurre (1) aufweist, wobei die Verstellvorrichtung (8) zusätzlich oder alternativ auf Grundlage des durch die Waage ermittelten Schüttgutstroms (3) ansteuerbar ist.

14. Verfahren zum Betreiben einer Schurre (1), aufweisend die Schritte:
Speisen zumindest eines Schurreneinlasses (4) mit einem Schüttgutstrom (3);
Aufgeben des Schüttgutstroms (3) durch zumindest einen Schurrenauslass (5) auf einen Förderer (2);
Ermitteln der Ist-Lage des Schüttgutstroms (3) auf einem Fördermittel des Förderers (2) mittels einer Erfassungseinrichtung (7), wobei die Lage des Schüttgutsroms (3) dadurch bestimmt wird, dass ein Mittelpunkt oder eine Mittelachse des Schüttgutstroms (3) im Hinblick auf eine seitliche Ausbreitung des Schüttgutstroms (3) ermittelt wird und diese in Relation zu einer fixen Mittelachse des Förderers gesetzt wird;
Übermitteln der mittels der Erfassungseinrichtung (7) ermittelten Ist-Werte an eine Steuereinheit (9) und Abgleichen der Ist-Werte mit entsprechenden vorbestimmten Soll-Werten;
Erzeugen eines Signals auf Grundlage der ermittelten Differenz zwischen den Ist-Werten und den Soll-Werten mittels der Steuereinheit (9) zum Ansteuern von zumindest einem Leitelement (6) zum Umlenken des Schüttgutstroms (3), sodass der zumindest eine erfasste Parameter des auf das Fördermittel (2) aufgegebenen Schüttgutstroms (3) dem jeweiligen vorbestimmten Soll-Wert angenähert wird.

15. Verfahren nach Anspruch 14, welches ferner umfasst:
Ermitteln des Gewichts des Massenstroms des Schüttguts vor Erreichen des Schurreneinlasses (4);
Anlernen der Steuereinheit (9) hinsichtlich der zu erwartenden Auslenkung des Schüttgutstroms (3) in Abhängigkeit vom ermittelten Massenstrom durch Zuordnen der für bestimmte Auslenkungen ermittelten Signale für das Ansteuern des zumindest einen Leitelements (6) zum jeweiligen ermittelten Massenstrom;
Frühzeitiges Ansteuern des zumindest einen Leitelements (6) mittels der zugeordneten Steuersignale in Abhängigkeit des ermittelten Massenstroms.

16. Verfahren nach Anspruch 14 oder 15, wobei zumindest zwei Leitelemente (6) vorgesehen sind, welche unabhängig voneinander angesteuert werden und wobei für jedes Leitelement (6) ein separates Ansteuersignal erzeugt wird.

## Claims

1. Chute (1) for the self-centering feeding of bulk material onto a conveyor, which chute provides a sliding means for the directed transport of a bulk material flow (3),
comprising at least one inlet (4) for bulk material, which is arranged at an upper portion of the chute (1),
and comprising at least one outlet (5) for bulk material, which is arranged at a lower portion of the chute (1),
and comprising a conveyor (2) arranged below the outlet (5) for transporting away the fed-in bulk material in a conveying direction (X),
and comprising at least one adjustable guide element (6) for deflecting the bulk material flow (3),
and comprising a detection device (7) for detecting an actual state of at least one parameter of the bulk material flow (3) fed onto a conveying means of the conveyor,
an adjusting apparatus (8) for adjusting the at least one guide element (6) being controlled on the basis of the actual state in such a way that the at least one detected parameter of the bulk material flow (3) fed onto the conveying means (2) is brought closer to a predetermined target state,
**characterized in that** the at least one parameter comprises the position of the bulk material flow (3) on the conveying means (2), the position of the bulk material flow (3) being a relation of a center point or a center axis of the bulk material flow (3) with regard to a lateral spread of the bulk material flow (3) to a fixed center axis of the conveyor.

2. Chute (1) according to claim 1, wherein the adjusting apparatus (8) has two or more guide elements (6).

3. Chute (1) according to claim 1, wherein the adjusting apparatus (8) has a control unit (9) by means of which the at least one guide element (6) can be controlled.

4. Chute (1) according to claim 2, wherein the adjusting apparatus (8) has a control unit (9) by means of which the two or more guide elements (6) can be controlled independently of one another.

5. Chute (1) according to any of the preceding claims, wherein the at least one guide element (6) is connected to the chute (1) or the outlet (5) in an articulated manner at its upper edge, so that a passage cross-section (A) for the bulk material flow (3) can be defined by means of the lower edge of the at least one guide plate (6).

6. Chute (1) according to any of the preceding claims, wherein the at least one guide element (6) is fastened to the outlet (5) and is continuously adjustable between a first position in which the passage cross-section (A) is enlarged and a second position in which the passage cross-section (A) is reduced.

7. Chute (1) according to any of the preceding claims, wherein the adjusting apparatus (8) has at least one actuator (10) for each guide element (6), which actuator controls the particular guide element (6) pneumatically, hydraulically or by means of an electric motor.

8. Chute (1) according to any of the preceding claims, wherein the at least one guide element (6) is arranged such that the bulk material flow (3) is deflected substantially orthogonally to the conveying direction (X).

9. Chute (1) according to any of the preceding claims, wherein the at least one parameter comprises the position of the bulk material flow (3) on the conveying means (2) and the volume flow of the bulk material on the conveying means.

10. Chute (1) according to any of the preceding claims, wherein the detection device (7) has a sensor.

11. Chute (1) according to any of the preceding claims, wherein the sensor is directed in the conveying direction (X) downstream of the chute (1) toward the bulk material flow (3) or the conveying means (2).

12. Chute (1) according to any of the preceding claims, wherein the conveyor (2) is rotatable relative to the chute (1) so that the conveying direction (X) is variable.

13. Chute (1) according to any of the preceding claims, which further comprises another conveying apparatus (11) upstream for supplying the chute (1) with the bulk material flow (3), wherein the conveying apparatus (11) has a scale (12), in particular a belt scale, for weighing the bulk material flow (3) before it reaches the inlet (4) of the chute (1), wherein the adjusting apparatus (8) can be additionally or alternatively controlled on the basis of the bulk material flow (3) determined by the scale.

14. Method for operating a chute (1), comprising the steps of:
supplying at least one chute inlet (4) with a bulk material flow (3);
feeding the bulk material flow (3) through at least one chute outlet (5) onto a conveyor (2);
determining the actual position of the bulk material flow (3) on a conveying means of the conveyor (2) by means of a detection device (7), wherein the position of the bulk material flow (3) is determined by determining a center point or a center axis of the bulk material flow (3) with regard to a lateral spread of the bulk material flow (3) and setting this in relation to a fixed center axis of the conveyor;
transmitting the actual values determined by means of the detection device (7) to a control unit (9) and comparing the actual values with corresponding predetermined target values;
generating a signal on the basis of the determined difference between the actual values and the target values by means of the control unit (9) for controlling at least one guide element (6) for deflecting the bulk material flow (3) so that the at least one detected parameter of the bulk material flow (3) fed onto the conveying means (2) is brought closer to the particular predetermined target value.

15. Method according to claim 14, further comprising:
determining the weight of the mass flow of the bulk material before it reaches the chute inlet (4);
teaching the control unit (9) with regard to the expected deflection of the bulk material flow (3) on the basis of the determined mass flow by assigning the signals determined for certain deflections for controlling the at least one guide element (6) to the particular determined mass flow;
early control of the at least one guide element (6) by means of the assigned control signals on the basis of the determined mass flow.

16. Method according to claim 14 or 15, wherein at least two guide elements (6) are provided which are controlled independently of one another and wherein a separate control signal is generated for each guide element (6).

## Revendications

1. Glissière (1) pour le chargement autocentré d'un produit en vrac sur un transporteur, laquelle glissière fournit une goulotte pour le transport dirigé d'un flux de produit en vrac (3),
comportant au moins une entrée (4) pour le produit en vrac qui est disposée sur une section supérieure de la glissière (1),
et comportant au moins une sortie (5) pour le produit en vrac qui est disposée sur une section inférieure de la glissière (1),
et comportant un transporteur (2) disposé en dessous de la sortie (5) pour le transport d'évacuation du produit en vrac chargé dans un sens de transport (X), et comportant au moins un élément de guidage (6) réglable permettant de dévier le flux de produit en vrac (3), et comportant un appareil de détection (7) permettant de détecter un état réel d'au moins un paramètre du flux de produit en vrac (3) chargé sur un moyen de transport du transporteur, dans laquelle un dispositif de réglage (8) permettant de régler l'au moins un élément de guidage (6) sur la base de l'état réel est commandé de telle sorte que l'au moins un paramètre détecté du flux de produit en vrac (3) chargé sur le moyen de transport (2) s'approche d'un état de consigne prédéterminé, **caractérisée en ce que** l'au moins un paramètre comprend la position du flux de produit en vrac (3) sur le moyen de transport (2), dans laquelle la position du flux de produit en vrac (3) est une relation entre un centre ou un axe central du flux de produit en vrac (3) en vue d'une propagation latérale du flux de produit en vrac (3) et un axe central fixe du transporteur.

2. Glissière (1) selon la revendication 1, dans laquelle le dispositif de réglage (8) présente deux éléments de guidage (6) ou plus.

3. Glissière (1) selon la revendication 1, dans laquelle le dispositif de réglage (8) présente une unité de commande (9) au moyen de laquelle l'au moins un élément de guidage (6) peut être commandé.

4. Glissière (1) selon la revendication 2, dans laquelle le dispositif de réglage (8) présente une unité de commande (9) au moyen de laquelle les deux éléments de guidage (6) ou plus peuvent être commandés indépendamment l'un de l'autre.

5. Glissière (1) selon l'une des revendications précédentes, dans laquelle l'au moins un élément de guidage (6) est relié de manière à être monté de façon articulée à la glissière (1) ou à la sortie (5) au niveau de son bord supérieur, de sorte qu'une section transversale de passage (A) pour le flux de produit en vrac (3) peut être définie au moyen du bord inférieur de l'au moins une tôle de guidage (6).

6. Glissière (1) selon l'une des revendications précédentes, dans laquelle l'au moins un élément de guidage (6) est fixé à la sortie (5) et est respectivement réglable en continu entre une première position, dans laquelle la section transversale de passage (A) est agrandie, et une seconde position, dans laquelle la section transversale de passage (A) est rétrécie.

7. Glissière (1) selon l'une des revendications précédentes, dans laquelle le dispositif de réglage (8) présente, pour chaque élément de guidage (6), au moins un actionneur (10) qui commande l'élément de guidage (6) respectif de manière pneumatique, hydraulique ou électromotrice.

8. Glissière (1) selon l'une des revendications précédentes, dans laquelle l'au moins un élément de guidage (6) est disposé de sorte que la déviation du flux de produit en vrac (3) est effectuée sensiblement orthogonalement par rapport au sens de transport (X).

9. Glissière (1) selon l'une des revendications précédentes, dans laquelle l'au moins un paramètre comprend la position du flux de produit en vrac (3) sur le moyen de transport (2) et le débit volumique du produit en vrac sur le moyen de transport.

10. Glissière (1) selon l'une des revendications précédentes, dans laquelle l'appareil de détection (7) présente un capteur.

11. Glissière (1) selon l'une des revendications précédentes, dans laquelle le capteur est orienté, dans le sens de transport (X), en aval de la glissière (1) vers le flux de produit en vrac (3) ou le moyen de transport (2).

12. Glissière (1) selon l'une des revendications précédentes, dans laquelle le transporteur (2) peut tourner par rapport à la glissière (1), de sorte que le sens de transport (X) peut être modifié.

13. Glissière (1) selon l'une des revendications précédentes, laquelle est en outre précédée d'un autre dispositif de transport (11) permettant d'alimenter la glissière (1) avec le flux de produit en vrac (3), dans laquelle le dispositif de transport (11) présente une balance (12), en particulier une balance à courroie, permettant de peser le flux de produit en vrac (3) avant qu'il n'atteigne l'entrée (4) de la glissière (1), dans laquelle le dispositif de réglage (8) peut être commandé en plus ou en tant qu'alternative sur la base du flux de produit en vrac (3) déterminé par la balance.

14. Procédé permettant de faire fonctionner une glissière (1), présentant les étapes consistant à : alimenter au moins une entrée de glissière (4) avec un flux de produit en vrac (3) ; charger le flux de produit en vrac (3) par au moins une sortie de glissière (5) sur un transporteur (2) ;
déterminer la position réelle du flux de produit en vrac (3) sur un moyen de transport du transporteur (2) au moyen d'un appareil de détection (7), dans lequel la position du flux de produit en vrac (3) est déterminée par le fait qu'un centre ou un axe central du flux de produit en vrac (3) est déterminé en vue d'une propagation latérale du flux de produit en vrac (3) et que celui-ci est mis en relation avec un axe central fixe du transporteur ;
transmettre les valeurs réelles déterminées au moyen de l'appareil de détection (7) à une unité de commande (9) et ajuster les valeurs réelles avec des valeurs de consigne prédéterminées correspondantes ;
générer un signal sur la base de la différence déterminée entre les valeurs réelles et les valeurs de consigne au moyen de l'unité de commande (9) pour la commande d'au moins un élément de guidage (6) pour la déviation du flux de produit en vrac (3), de sorte que l'au moins un paramètre détecté du flux de produit en vrac (3) chargé sur le moyen de transport (2) s'approche de la valeur de consigne respective prédéterminée.

15. Procédé selon la revendication 14, lequel comprend en outre :
la détermination du poids du débit massique du produit en vrac avant qu'il n'atteigne l'entrée de glissière (4) ;
l'entraînement de l'unité de commande (9) en ce qui concerne la déviation attendue du flux de produit en vrac (3) en fonction du débit massique déterminé en associant les signaux déterminés pour certaines déviations pour la commande de l'au moins un élément de guidage (6) au débit massique respectif déterminé ;
la commande à l'avance de l'au moins un élément de guidage (6) au moyen des signaux de commande associés en fonction du débit massique déterminé.

16. Procédé selon la revendication 14 ou 15, dans lequel au moins deux éléments de guidage (6) sont prévus, lesquels sont commandés indépendamment l'un de l'autre, et dans lequel un signal de commande séparé est généré pour chaque élément de guidage (6).
